(19) **Europäisches Patentamt**

**European Patent Office**

**Office européen des brevets**

(11) **EP 1 309 809 B1**

(12) **EUROPÄISCHE PATENTSCHRIFT**

| | |
|---|---|
| (45) Veröffentlichungstag und Bekanntmachung des Hinweises auf die Patenterteilung: **06.05.2004 Patentblatt 2004/19** | (51) Int Cl.$^7$: **F16H 59/66**, F16H 59/12 |
| (21) Anmeldenummer: **01965193.4** | (86) Internationale Anmeldenummer: **PCT/EP2001/009410** |
| (22) Anmeldetag: **15.08.2001** | (87) Internationale Veröffentlichungsnummer: **WO 2002/014718 (21.02.2002 Gazette 2002/08)** |

(54) **EINRICHTUNG ZUR VORGABE EINES FAHRERWUNSCHES MIT EINER VORRICHTUNG ZUR NEIGUNGSERFASSUNG**

ARRANGEMENT FOR THE SETTING OF A DRIVER COMMAND WITH A DEVICE FOR INCLINATION DETERMINATION

SYSTEME POUR LE REGLAGE D'UNE COMMANDE CONDUCTEUR AVEC DISPOSITIF DE DETECTION D'INCLINAISON

| | |
|---|---|
| (84) Benannte Vertragsstaaten:<br>**AT BE CH CY DE DK ES FI FR GB GR IE IT LI LU MC NL PT SE TR** | (74) Vertreter: **Dr. Weitzel & Partner**<br>**Friedenstrasse 10**<br>**89522 Heidenheim (DE)** |
| (30) Priorität: **15.08.2000 DE 10040558** | (56) Entgegenhaltungen:<br>**EP-A- 1 050 698 WO-A-91/10220**<br>**US-A- 4 471 437 US-A- 4 884 057** |
| (43) Veröffentlichungstag der Anmeldung:<br>**14.05.2003 Patentblatt 2003/20** | |
| (73) Patentinhaber: **Voith Turbo GmbH & Co. KG**<br>**89522 Heidenheim (DE)** | • **MILANOVIC V ET AL: "CONVECTION-BASED ACCELEROMETER AND TILT SENSOR IMPLEMENTED IN STANDARD CMOS" TECHNICAL DIGEST. MEMS. IEEE INTERNATIONAL CONFERENCE ON MICRO ELECTRO MECHANICAL SYSTEMS, XX, XX, Bd. 66, 1998, Seiten 487-490, XP001020850** |
| (72) Erfinder:<br>• **BÜRK, Richard**<br>**88454 Hochdorf (DE)**<br>• **DIETZEL, Bernd**<br>**89428 Syrgenstein (DE)** | • **LEMME H: "Elektronische Wasserwaage" ELEKTRONIK, Bd. 50, Nr. 14, 10. Juli 2001 (2001-07-10), Seiten 36-41, XP001041312 in der Anmeldung erwähnt** |

**Beschreibung**

Die Erfindung betrifft eine Einrichtung zur Vorgabe eines Fahrerwunsches zur Einstellung oder Änderung eines Fahrzustandes, mit einer Vorrichtung zur Neigungserfassung, im einzelnen mit den Merkmalen aus dem Oberbegriff des Anspruches 1.

Bei der Ansteuerung von automatischen Getrieben oder automatisierten Getrieben in Fahrzeugen steht zunehmend ein optimiertes Motor-Getriebemanagement im Vordergrund. Zur Gewährleistung des Betriebes der Antriebsmaschine entsprechend einer Kennlinie optimalen Wirkungsgrades im Kennfeld der Antriebsmaschine, einer Kennlinie optimierten Verbrauches oder einem anderen Wunschkriterium ist es erforderlich, eine Reihe von Randbedingungen, welche auf die Betriebsweise der Antriebsmaschine wenigstens mittelbar einen Einfluß ausüben, mit zu berücksichtigen. Neben den am Fahrzeug auftretenden zu berücksichtigenden Randbedingungen, beispielsweise die Zu- und Abschaltung von Nebenaggregaten, spielen auch die nicht fahrzeugspezifischen Randbedingungen eine wesentliche Rolle. Zu diesen gehören unter anderem die Beschaffenheit der Fahrstrecke, insbesondere eine Aussage über die Fahrbahnneigung, welche sich entweder in einem erhöhten oder verringerten Leistungsbedarf und damit einer erhöhten oder verringerten Leistungsanforderung an die Antriebsmaschine niederschlagen. Eine Einrichtung, die die Neigung des Fahrzeuges gegenüber der Horizontalen auch unter dem Einfluß der Fahrzeuggeschwindigkeit und Beschleunigung zweifelsfrei erfaßt, ist bisher nicht bekannt. Eine Erfassung mittels bestimmter Hilfsmittel, beispielsweise eines Pendels, ist nur im Stillstand ohne zusätzliche Plausibilitätsprüfungen möglich, während der Fahrt des Fahrzeuges jedoch nicht ohne Berücksichtigung der Fahrgeschwindigkeit und Beschleunigung, welche sich in komplizierten Rechenmodellen äußern, möglich. In einer parallelen nicht veröffentlichten Anmeldung wird dazu vorgeschlagen, daß die Neigung aus der Höhendifferenz zwischen zwei Referenzereighissen ermittelt wird, wobei die Höhendifferenz für wenigstens zwei unterschiedliche, den Fortbewegungszustand des Fahrzeuges in Fahrtrichtung charakterisierende Referenzereignisse aus dem jeweils am Fahrzeug vorherrschenden Luftgesamtdruck ermittelt wird. Aus den jeweiligen Druckwerten - erster Druckwert $p_1$ für ein erstes Referenzereignis und zweiter Druckwert $p_2$ für ein zweites Referenzereignis - wird aus der barometrischen Höhenformel für den Schweredruck in Luft jeweils die Höhe des Fahrzeuges über Null für das erste Referenzereignis und die zweite Höhe $h_2$ für das zweite Referenzereignis ermittelt. Die beiden Referenzereignisse charakterisieren des weiteren entweder direkt oder indirekt eine Referenzstrecke $\Delta s$, welche durch den örtlichen Abstand der Position des Fahrzeuges zu beiden Referenzereignissen charakterisiert ist Aus dem Quotienten der Differenz der Höhen - zweiter Höhe und erster Höhe - sowie der Referenzstrecke $\Delta s$ wird der Tangens des die Neigung N charakterisierenden Winkels der Horizontalen gegenüber der Fahrbahn und damit der Winkel $\alpha$ für die Fahrbahnneigung über der Horizontalen ermittelt. Die Erfassung der Neigung der Fahrbahn in einem Fahrzeug erfolgt dabei immer zwischen wenigstens zwei Referenzereignissen, wobei jedoch zu einer genauen Erfassung auch eine Mehrzahl von Einzelerfassungen und damit einer Vielzahl von hintereinander vorgenommenen Beurteilungen von aufeinanderfolgenden Referenzereignissen erfolgen kann. Die Gewährleistung einer exakten Höhenermittlung ist jedoch in erheblichem Maße von der Platzierung des Neigungs- bzw. Drucksensors abhängig.

Eine derartige wertungsgemäße Vorrichtung ist beispielsweise aus der gattungsbildenden Druckschrift US-PS 4,471,437 vorbekannt. Diese umfasst eine Vorrichtung zur Erfassung der Neigung der Fahrband in einem Fahrzeug in Form eines Gradientensensors, wobei die über diesen ermittelten Größen in einer Steuereinrichtung ausgewertet werden.

Der Erfindung liegt daher die Aufgabe zugrunde, eine Vorrichtung zur Bestimmung der Neigung, insbesondere einen Neigungssensor, derart im Fahrzeug zu integrieren, daß zum einen eine zuverlässige und aussagekräftige Druckermittlung erfolgen kann und des weiteren die Anordnung durch eine leichte Austauschbarkeit sowie geringe Länge der Leitungsverbindungen zu weiteren, die Druckwerte verarbeitenden Einrichtungen charakterisiert ist.

Die erfindungsgemäße Lösung ist durch die Merkmale des Anspruches 1 charakerisiert. Vorteilhafte Ausgestaltungen sind in den Unteransprüchen wiedergegeben.

Eine Vorrichtung zur Bestimmung der Neigung der Fahrbahn in einem Fahrzeug umfaßt eine Einrichtung zur wenigstens mittelbaren Erfassung einer, die Neigung der Fahrbahn wenigstens indirekt charakterisierenden Größe. Wenigstens mittelbar bedeutet indirekt oder direkt, d.h. die konkret zur Neigungserfassung erforderlichen Größen werden entweder über andere Größen ermittelt oder aber direkt erfaßt. Die Einrichtung zur wenigstens mittelbaren Erfassung einer, die Neigung der Fahrbahn wenigstens indirekt charakterisierenden Größe bildet erfindungsgemäß mit einer Einrichtung zur Vorgabe und/oder Erfassung eines Fahrerwunsches zur Einstellung oder Änderung eines Fahrzustandes, insbesondere zur Sollwertvorgabe für einen Fahrerwunsch zur Ansteuerung der einzelnen Schaltelemente und/oder anderer leistungsübertragender Elemente einer Getriebebaueinheit über eine Steuereinrichtung zur Ansteuerung einer Getriebebaueinheit eine bauliche Einheit. Unter dem Begriff "Einrichtung zur Vorgabe eines Fahrerwunsches" ist dabei die Vorwahlmöglichkeit hinsichtlich eines Fahrzustandes über eine Vorrichtung zu verstehen.

Die erfindungsgemäße Lösung zur Bildung einer baulichen Einheit aus Einrichtung Vorgabe eines Fahrerwunsches zur Einstellung oder Änderung eines Fahrzustandes einer Getriebebaueinheit und Einrichtung zur Erfassung einer die Neigung der Fahrbahn wenigstens mittelbar, d. h. indirekt charakterisierenden Größe, ermöglicht die Schaffung einer besonders kompakten und selbständig handelbaren Baueinheit. Diese stellt gleichzeitig eine optimale Anordnungsmöglichkeit für den Drucksensor zum Zwecke der Ermittlung des Umgebungsdruckes zur Neigungserfassung dar. Die Druckerfassung erfolgt dabei an einem Ort, welcher nahezu frei von die Druckbestimmung erheblich beeinflussenden Faktoren ist.

Auch handelt es sich bei der Einrichtung zur Vorgabe eines Fahrerwunsches zur Änderung oder Einstellung des Fahrzustandes, insbesondere bei Ausführung als Tastenschalter, um ein für Luft weitgehend offenes System, welches im Fahrerarbeitsplatz integriert ist. Dieser bietet sich daher optimal für die Anordnung eines Sensors, insbesondere Luftdrucksensors zur Erfassung einer die Fahrbahnneigung wenigstens mittelbar beschreibenden Größe an. Insbesondere der Luftdrucksensor bietet den großen Vorteil, unabhängig von der Einbaulage zu sein.

Die Zusammenfassung zur baulichen Einheit erfolgt entweder durch

a) Integration der Einrichtung zur Erfassung einer die Neigung der Fahrbahn wenigstens mittelbar charakterisiemder Größe oder

b) das Aneinanderflanschen der Einrichtung zur Vorgabe eines Fahrerwunsches zur Einstellung oder Änderung eines Fahrzustandes und der Einrichtung zur Erfassung wenigstens einer die Neigung der Fahrbahn wenigstens mittelbar beschreibenden Größe im Bereich von deren Gehäuse.

Die Einrichtung zur wenigstens mittelbaren Erfassung einer die Neigung der Fahrbahn wenigstens mittelbar beschreibenden Größe umfaßt mindestens einen Sensor, welcher vorzugsweise als Drucksensor ausgeführt ist.

Die Gesamtvorrichtung zur Bestimmung der Neigung der Fahrbahn in einem Fahrzeug umfaßt des weiteren mindestens eine entweder im Bereich der Einrichtung zur Vorwahl des Fahrerwunsches angeordnete oder in einer einer Komponente des Antriebsstranges, vorzugsweise der Getriebebaueinheit, zugeordneten Steuereinrichtung integrierte oder von dieser gebildete Berechnungseinrichtung, welche einen Eingang bei serieller Datenübertragung oder mindestens zwei Eingänge bei paralleler Datenübertragung, sowie entsprechend der Art der Datenübertragung mindestens einen Ausgang zur Ausgabe der Größe der Fahrbahnneigung in Form eines Winkels $\alpha_N$ bzw. bei Angabe in % N aufweist. Die einzelnen Eingänge sind dabei entweder direkt oder indirekt, d.h. ohne oder unter Zwischenschaltung weiterer Einrichtungen unterschiedlicher Funktion mit Einrichtungen zur Erfassung der zur Bestimmung des Winkels $\alpha_N$ der Neigung N erforderlichen Größen gekoppelt. Der erste Eingang ist dabei mit einer Einrichtung zur Erfassung eines, den Druck p wenigstens mittelbar beschreibenden Größe gekoppelt, während der zweite Eingang mit einer Einrichtung zur Erfassung wenigstens einer, die zurückgelegte Fahrstrecke zwischen zwei Referenzereignissen wenigstens mittelbar beschreibende Größe verbunden ist. Vorzugsweise erfolgt die Erfassung des Druckes direkt. Die Einrichtung zur Erfassung einer den Druck wenigstens mittelbar beschreibenden Größe umfaßt dazu mindestens einen Drucksensor. Die Einrichtung zur Erfassung der Fahrstrecke bzw. der die Fahrstrecke wenigstens mittelbar charakterisierenden Größen zwischen den beiden Referenzereignissen kann vielgestaltig ausgeführt sein, beispielsweise in Form eines Wegaufnehmers. Eine andere Möglichkeit besteht in der indirekten Erfassung der Fahrstrecke aus der Geschwindigkeit, der Beschleunigung und der Zeitdauer zwischen beiden Referenzereignissen. Entsprechend der an den Eingängen anliegenden Größen werden diese in der Berechnungseinrichtung verarbeitet. Dabei werden die zu zwei Referenzereignissen, welche beispielsweise durch zwei unterschiedliche Zeitpunkte zur Charakterisierung der Stellung des Fahrzeuges beschreibbar sind, erfaßten Druckwerte in die entsprechenden Höhen aus der barometrischen Höhenformel unter Berücksichtigung eines Korrekturalgorithmus umgerechnet. Die Ermittlung der Fahrstrecke zwischen den Referenzereignissen ist dabei entweder direkt bei Verwendung eines Wegaufnehmers aus der am zweiten Eingang anliegenden Größe bestimmbar oder muß aus den, die Koordinaten der Stellung des Fahrzeuges zu den einzelnen Referenzereignissen beschreibenden Größen ermittelt, insbesondere berechnet werden. Diesbezüglich bestehen ebenfalls eine Vielzahl von Möglichkeiten, welche auf eine einfache geometrische Abstandsberechnung hinauslaufen, weshalb hier im einzelnen nicht näher darauf eingegangen wird.

Aus dem Tangens eines Winkels, welcher aus der Differenz der für die einzelnen Referenzereignisse ermittelten Höhenwerte und der Fahrstrecke bestimmt wird, wird die Fahrbahnneigung N ermittelt.

Die einzelnen Berechnungsschritte werden dabei entweder

a) in einzelnen voneinander entkoppelten und räumlich getrennt voneinander, d.h. dezentral angeordneten Berechnungseinheiten durchgeführt, oder erfolgen

b) in in einer Baueinheit integrierten Berechnungseinheiten.

Die jeweils letzte Berechnungseinheit weist in beiden Fällen dabei den Ausgang auf, welcher zur Ausgabe eines Wertes für die Fahrbahnneigung ausgebildet ist. Dieser Ausgang bildet vorzugsweise gleichzeitig den Ausgang der Berechnungseinrichtung.

Im Fall b) ist die Vorrichtung als eigenständige vorrichtungsmäßig vorliegende Baueinheit ausgeführt und bildet somit für sich allein die Gesamtfunktionseinheit eines Neigungssensors. Im Fall a) liegt eine Baueinheit aus dezentral angeordneten Untereinheiten vor, welche miteinander vorzugsweise über Mittel zur seriellen Datenübertragung gekoppelt sind, beispielsweise einen CAN-Bus. In beiden Fällen werden mechanische oder physikalische Signale erfaßt und aus diesen ein entsprechendes Signal, vorzugsweise ein elektrisches Signal für den Neigungswert der Fahrbahn gebildet.

Die Berechnungseinrichtung ist vorzugsweise in unmittelbarer räumlicher Nähe zur Einrichtung zur Erfassung einer die Neigung der Fahrbehn wenigstens mittelbar charakterisierenden Größe angeordnet. Räumliche Entfernungen sind ebenfalls denkbar, vorzugsweise jedoch nur für den Teil der Berechnungseinrichtung, mittels welchem die aus den ermittelten Höhen vorzunehmenden mathematischen Operationen die Neigung der Fahrbahn ermitteln.

Gemäß einem weiteren Lösungsansatz nach Anspruch 11 umfaßt die Einrichtung zur Vorgabe eines Fahrerwunsches zur Einstellung oder Änderung eines Fahrzustandes einer Getriebebaueinheit mindestens ein Betätigungselement sowie Mittel zur Generierung mindestens eines Signales aus einer die Betätigung des Betätigungselementes wenigstens mittelbar beschreibenden physikalischen Größe. Erfindungsgemäß umfaßt diese des weiteren eine Einrichtung zur Erfassung einer die Neigung der Fahrbahn wenigstens mittelbar charakterisierenden Größe. Die Einrichtung zur wenigstens mittelbaren Erfassung einer die Neigung der Fahrbahn wenigstens mittelbar beschreibenden Größe umfaßt mindestens einen Sensor, welcher vorzugsweise als Drucksensor ausgeführt ist.

Eine weitere Möglichkeit besteht darin, als Einrichtung zur wenigstens mittelbaren Erfassung einer die Neigung der Fahrbahn wenigstens mittelbar beschreibenden Größe einen Neigungssensor zu verwenden, welcher auf der Basis thermischer Konvektion die Neigung ermittelt. Dieser ist als Sensorbaueinheit ausgeführt, umfassend mindestens zwei Temperatursensoren, die über eine Brücke miteinander verschaltet sind. Zwischen den Sensoren befindet sich ein Heizelement. Diese Elemente sind dabei in einem hermetisch dichten Gehäuse gekapselt und bilden eine Sensorbaueinheit. Dabei strömt die eingeschlossene Luft im Kreis, vom Heizer aus nach oben zum Gehäuse, wo sie abgekühlt wird und an der Wandung wieder zurück. Liegt der Sensor waagerecht, ist die "Wolke" aus Heizluft dabei symmetrisch. Beide Temperatursensoren nehmen gleiche Temperaturen ab.Wird der Sensor unter einem bestimmten Winkel gekippt, registrieren die beiden Temperatursensoren unterschiedliche Temperaturwerte. Aus der Temperaturdifferenz, welche sich aufgrund der Neigung ergibt, kann die Neigung ermittelt werden. Derartige Sensoren können dabei unterschiedlich ausgeführt sein. Dazu wird auf Helmut Lemme: "Elektronische Wunderwaage", Elektronik 14/2001, Seiten 36 bis 41, verwiesen. Der Offenbarungsgehalt bezüglich der konkreten Ausgestaltung der Sensorbaueinheiten zur Neigungserfassung über eine neigungsabhängige Temperaturdifferenz wird dabei vollumfänglich in den Offenbarungsgehalt dieser Druckschrift mit einbezogen. Dieser kann dabei als Sensor mit einem externen Differenzverstärker und Mikrocontroller ausgeführt sein, wobei der Mikrocontroller zur Aufbereitung der über den Sensor erfaßten Größen auch direkt an der Einrichtung zur Vorgabe des Fahrerwunsches, vorzugsweise am Tastenschalter angeordnet sein kann bzw. mit diesem eine bauliche Einheit bildet. Des weiteren kann die Funktion des Mikrocontrollers auch von der ohnehin zur sensorspezifischen Aufbereitung bei der Betätigung der einzelnen Bedienelemente des Tastenschalters vorhandenen Mikrorechnereinheit gebildet werden. Eine weitere Möglichkeit besteht darin, die Sensorbaueinheit entsprechend der Offenbarung der genannten Druckschrift entsprechend der Ausführung der Firma MEMSIC auszuführen.

Unter einem weiteren Aspekt der Erfindung umfaßt die Einrichtung zur Vorgabe eines Fahrerwunsches zur sensorspezifischen Aufbereitung der erfassten Daten mindestens einen Rechner. Dieser ist ebenfalls mit der Einrichtung zur Erfassung der die Fahrbahnneigung wenigstens mittelbar beschreibenden Größen gekoppelt.

Vorzugsweise wird der Rechner von einer Steuereinrichtung gebildet. Diese dient nicht nur der sensorspezifischen Aufbereitung der erfassten Daten zur Ermittlung der Neigung der Fahrbahn sondern weist vorzugsweise eine Berechnungseinrichtung auf, welche zumindest mittels einer Berechnungseinheit eine teilweise Aufbereitung der mittels der Einrichtung zur Erfassung einer die Fahrbahnneigung wenigstens mittelbar beschreibenden Größe erfaßten Größe oder Größen dient. Im einzelnen besteht die Möglichkeit mittels einer ersten Berechnungseinheit eine Ermittlung der Höhen aus den Druckwerten vorzunehmen. Aus den errechneten oder abgeleiteten Höhen kann dann entweder in separaten Steuereinrichtungen oder aber der genannten einen Steuereinrichtung die Fahrbahnneigung ermittelt werden. Im zweiten genannten Fall ist es erforderlich, daß die Berechnungseinrichtung eine weitere Berechnungseinheit aufweist, welche der Ermittlung der Differenz zweier zu zwei Referenzereignissen ermittelten Höhen in Fahrtrichtung dient. Aus diesen wird dann mittels einer weiteren dritten Berechnungseinheit die zurückgelegte Referenzstrecke und des weiteren aus der Beziehung für den Neigungswinkel Tangens $\alpha = \Delta h : \Delta s$ die Neigung N ermittelt.

In einer besonders kompakten Ausführung wird zur Neigungsermittlung und Bestimmung eine in der Einrichtung zur Vorgabe des Fahrerwunsches bereits integrierte oder unmittelbar an dieser angeordnete Steuereinrichtung genutzt, die der Aufbereitung der Daten des Drucksensors oder eines anderen Sensors, welcher Daten zur Beschreibung des Neigungswertes liefern. In einer besonders kompakten Weiterentwicklung dieser Grundausführung übernimmt die Steuereinrichtung jedoch noch weitere Aufgaben, insbesondere bildet diese eine Teilsteuereinheit einer Steuervorrichtung zur Ansteuerung einer Getriebebaueinheit. In diesem Fall werden aus den die Betätigung der Betätigungselemente charakterisierenden physikalischen Größen entsprechend der Eingangssignale für die Steuereinrichtung gebildet, welche mit weiteren, zur Ansteuerung der Getriebebaueinheit fahrzeugseitig vorgebbaren Größen in dieser verarbeitet werden. In diesem Fall ist der Getriebebaueinheit eine weitere eigene Steuereinheit zugeordnet, die eine zweite Teilsteuereinheit einer Gesamtsteuereinrichtung zur Ansteuerung der Stellglieder einzelner Schaltelemente oder anderer leistungsübertragender Elemente der Getriebebaueinheit bildet. Dieser zweiten Teilsteuereinheit werden die von der mit der Einrichtung zur Vorgabe eines Fahrerwunsches zur Einstellung oder Änderung eines Fahrzustandes gekoppelten Steuereinheit verarbeiteten Größen bzw. Ausgangsgrößen zugeführt und daraus entsprechende Stellsignale zur Ansteuerung der Stellglieder, insbesondere der Schaltelemente gebildet. Die Kopplung zwischen der der Getriebebaueinheit unmittelbar zugeordneten Steuereinheit und der mit der Einrichtung zur Vorgabe eines Fahrerwunsches zur Einstellung oder Änderung eines Fahrzustandes gekoppelten Steuereinheit erfolgt vorzugsweise über eine serielle Schnittstelle vorzugsweise einen CAN-Bus. Diese Lösung stellt eine Minimalausführung bezüglich der erforderlichen Leitungsverbindungen dar. Insbesondere können die Leitungsverbindungen zwischen den Einrichtungen zur Erfassung von fahrzeugsseitig anliegenden Größen zur Berücksichtigung bei der Ansteuerung der Getriebebaueinheit und der mit der Einrichtung zur Vorwahl eines Fahrerwunsches zur Einstellung oder Änderung des Fahrzustandes gekoppelten Steuereinheit sehr gering gehalten werden, da diese räumlich nah beieinander angeordnet sind und somit keine Leitungsverbindungen über weite Strecken des Fahrzeuges erforderlich sind. Dies gilt in Analogie auch für die entsprechenden Kopplungen zwischen der der Getriebebaueinheit zugeordneten Steuereinheit und den anzusteuemden Stellgliedern. Über diese serielle Schnittstelle erfolgt gegebenenfalls auch die Kopplung der einzelnen Berechnungseinheiten zur Ermittlung der Fahrbahnneigung, die auf beide Teilsteuereinheiten der Gesamtsteuereinrichtung verteilt sein kann.

Die Einrichtung zur Vorgabe des Fahrerwunsches kann vielgestaltig ausgeführt sein. Denkbar sind Ausgührungen als Wahlhebel, Schalteinrichtung in Form von Tastenschaltern, Kippschaltern e.t.c.

Die erfindungsgemäße Lösung wird nachfolgend anhand von Figuren erläutert. Darin ist im einzelnen folgendes dargestellt:

| | |
|---|---|
| Figur 1a | verdeutlicht in schematisch vereinfachter Darstellung eine Ausführung einer Einrichtung zur Vorwahl eines Fahrerwunsches zur Änderung oder Einstellung eines bestimmten Fahrzustandes mit an diesem angeordneter Einrichtung zur Erfassung einer die Neigung der Fahrbahn wenigstens mittelbar charakterisiernden Größe; |
| Figur 1b | verdeutlicht in schematisch vereinfachter Darstellung das Grundprinzip des Aufbaus einer Einrichtung zur Vorgabe eines Fahrerwunsches zur Änderung oder Einstellung eines Fahrzustandes mit zumindest teilweiser Integration einer Einrichtung zur wenigstens mittelbaren Erfassung einer die Neigung der Fahrbahn wenigstens mittelbar charakterisierenden Größe; |
| Figuren 2a bis 2c | verdeutlichen in schematisch vereinfachter Darstellung besonders vorteilhafte erfindungsgemäße Ausgestaltungen der Kombination aus Einrichtung zur Vorgabe eines Fahrerwunsches zur Änderung oder Einstellung eines Fahrzustandes und Einrichtung zu wenigstens mittelbaren Erfassung einer die Fahrbahnneigung wenigstens mittelbar charakterisierender Größe. |

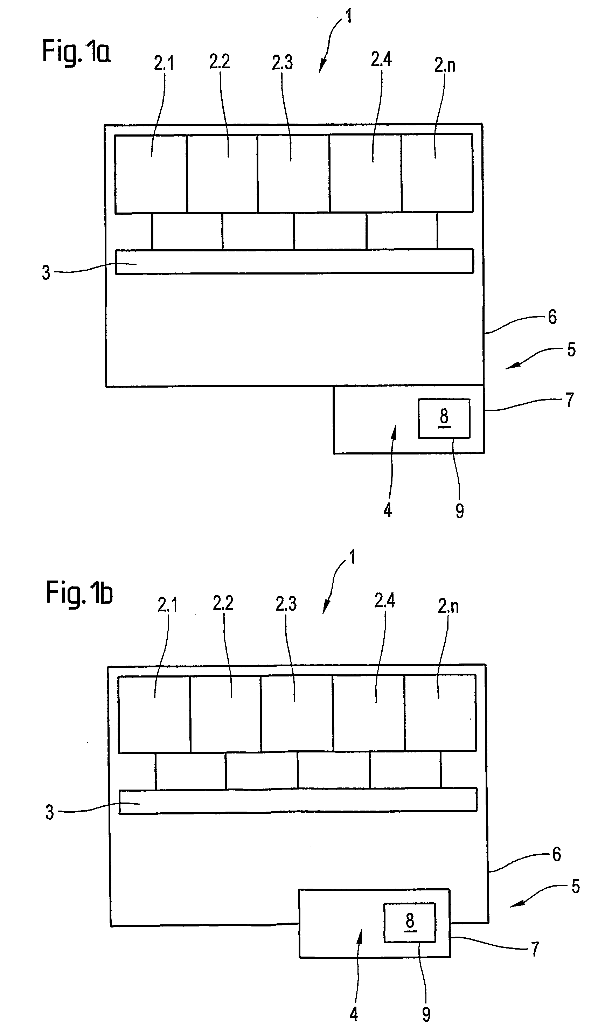

Die Figuren 1a und 1b verdeutlichen den Aufbau einer erfindungsgemäßen Einrichtung 1 zur Vorgabe eines Fahrerwunsches zur Einstellung eines Fahrzustandes einer Getriebebaueinheit in einem Antriebssystem mit einer Einrichtung 4 zur wenigstens mittelbaren Erfassung einer die Neigung N einer Fahrbahn wenigstens mittelbar, d.h. wenigstens indirekt oder direkt charakterisierenden Größe. Die Einrichtung 1 zur Vorgabe des Fahrerwunsches umfaßt Betätigungselemente 2 und Mittel 3 zur Generierung von Signalen zur wenigstens mittelbaren Ansteuerung einer Getriebebaueinheit aus den mittels den Betätigungselementen 2 bei Betätigung vorgegebenen physikalischen und/oder mechanischen Größen. Die Vorgabe des Fahrerwunsches erfolgt dabei durch Betätigung entweder des Betätigungselementes 2 bei Ausführungen als Schalthebel oder der Einzel-Betätigungselemente 2.1 bis 2.N bei Ausführung der Einrichtung zur Vorgabe des Fahrerwunsches als Tastenschalter, wie in Figur 1a dargestellt. Der Fahrerwunsch wird dabei aus mindestens einer der nachfolgend genannten Größen, welche die Betätigung des Betätigungselementes 2 oder der Einzel-Betätigungselemente 2.1 bis 2.N beschreiben, bestimmt:

- Weg s
- Winkel $\alpha$
- Zeitdauer der Betätigung $\Delta t$
- Beschleunigung a
- Intensität oder Druck

Aus jeweils einer einzelnen oder mehreren der obengenannten Größen bilden die Mittel 3 die entsprechenden elektrischen Signale zur wenigstens mittelbaren Ansteuerung der Getriebebaueinheit. Erfindungsgemäß ist der Einrichtung 1 zur Vorgabe eines Fahrerwunsches zur Einstellung oder Änderung des Fahrzustandes eine Einrichtung 4 zur wenigstens mittelbaren Erfassung einer die Neigung der Fahrbahn wenigstens mittelbar bestimmenden Größe zugeordnet. Die Zuordnung erfolgt dabei derart, daß unter Anordnung in unmittelbarer räumlicher Nähe zueinander die Einrichtung zur Vorgabe eines Fahrerwunsches 1 mit der Einrichtung 4 zur wenigstens mittelbaren Erfassung einer die Neigung der Fahrbahn wenigstens mittelbar charakterisierenden Größe eine bauliche Einheit bilden. Die bauliche Einheit kann dabei wie in der Figur 1a dargestellt durch aneinander Anflanschen der Einrichtung 1 zur Vorgabe eines Fahrerwunsches zur Einstellung oder Änderung eines Fahrzustandes und der Einrichtung 4 zur wenigstens mittelbaren Erfassung einer die Neigung der Fahrbahn wenigstens mittelbar bestimmenden Größe im Bereich von deren Gehäuse, dem Gehäuse 6 der Einrichtung 1 zur Vorgabe eines Fahrerwunsches, und dem Gehäuse 7 der Einrichtung 4 zur wenigstens mittelbaren Erfassung einer die Neigung der Fahrbahn wenigstens mittelbar charakterisierenden Größe, gebildet werden.

Die Einrichtung 4 zur wenigstens mittelbaren Erfassung einer die Neigung der Fahrbahn wenigstens mittelbar charakterisierenden Größe umfaßt mindestens einen Sensor 8, welcher der Erfassung des Umgebungsdruckes dient.

Demgegenüber offenbart die Figur 1b eine Ausführung, bei welcher die Einrichtung zur wenigstens mittelbaren Erfassung einer die Neigung der Fahrbahn wenigstens mittelbar bestimmenden Größe 4 in der Einrichtung zur Vorgabe eines Fahrerwunsches zur Einstellung oder Änderung eines Fahrzustandes zumindest teilweise im Gehäuse 6 der Einrichtung 1 integriert ist.

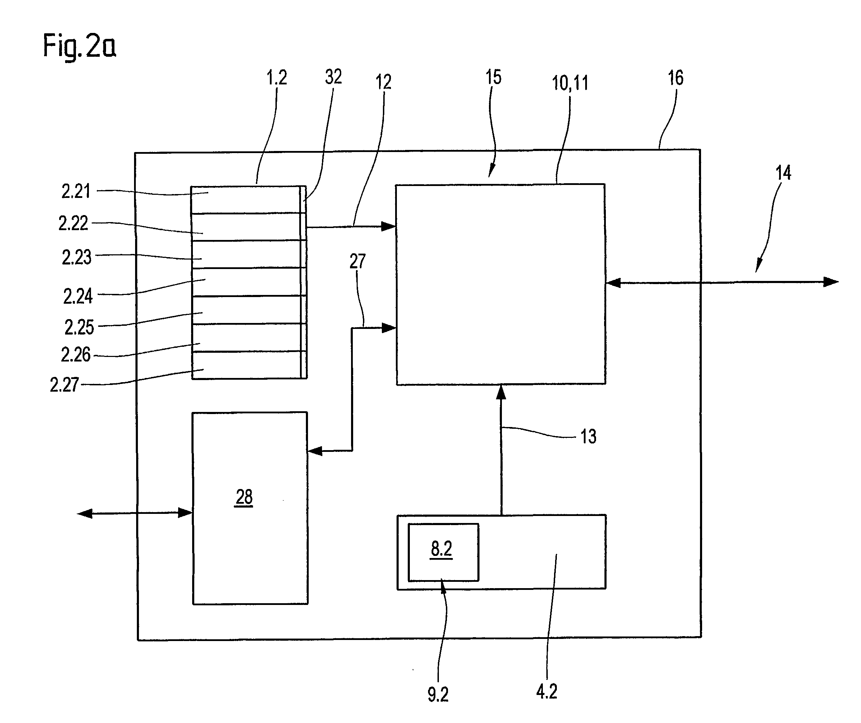

Die Figuren 2a bis 2c verdeutlichen anhand von Blockschaltbildern besonders bevorzugte Ausgestaltungen der Einrichtung 1.2 zur Vorgabe eines Fahrerwunsches zur Einstellung oder Änderung des Fahrzustandes mit integrierter Einrichtung 4.2 zur wenigstens mittelbaren Erfassung einer die Neigung der Fahrbahn wenigstens mittelbar beschreibenden Größe. Auch diese umfaßt ein Betätigungselement 2.2, insbesondere die Einzel-Betätigungselemente 2.21 bis 2.2N zur Auswahl des Fahrzustandes bzw. der einzulegenden Gangstufen. Des weiteren umfaßt diese die Einrichtung 4.2 zur wenigstens mittelbaren Erfassung einer die Neigung der Fahrbahn wenigstens mittelbar bestimmenden Größe in Form eines sogenannten Neigungssensors 8.2, vorzugsweise in Form eines Drucksensors 9.2, weicher am Gehäuse 6 der Einrichtung 1.2 oder zumindest teilweise im Gehäuse 6 integriert sein kann. Zusätzlich ist mindestens ein Rechner 10, vorzugsweise in Form eines Mikrorechners 11 vorgesehen, welcher sowohl der Einrichtung zur Vorgabe eines Fahrerwunsches 1.2 und der Einrichtung 4, d.h. dem Neigungssensor 8.2 zugeordnet ist. Die Minimalfunktion des Rechners 10 bzw. des Mikrorechners 11 wird dabei durch die sensorspezifische Aufbereitung der einzelnen erfaßten Daten, insbesondere der notwendigen Kompensationsmaßnahmen bestimmt. Dazu ist dieser zum einen mit den Betätigungselementen 2.2 bzw. den Einzel-Betätigungselementen 2.21 bis 2.2N über die Mittel 3.2 zur Generierung von Signalen, die den Fahrerwunsch repräsentieren, aus den durch die Betätigung der Betätigungselemente 2.2 bzw. 2.21 bis 2.2N vorgegebenen physikalischen und mechanischen Größen und der Einrichtung 4.2 in Form des Neigungssensors 8.2, insbesondere des Drucksensors 9.2 gekoppelt. Der Rechner 10 weist dazu mindestens die beiden Eingänge 12 und 13 auf. Des weiteren weist der Rechner 10 mindestens einen Ausgang 14 auf - bei serieller Datenübertragung ausreichend -, welcher mit anderen Steuereinrichtungen oder Verarbeitungssystemen gekoppelt ist. In der Minimallösung dient der Rechner 10 lediglich der sensorspezifischen Aufbereitung der mittels der Einrichtung 1 und/oder Einrichtung 4 ermittelten und erfaßten Daten. In einer bauteilmäßig kompakten Ausgestaltung ist diese Bestandteil einer Steuereinrichtung 15, wobei die Bezeichnung Steuereinrichtung der Beschreibung der gerätetechnischen Komponente dient und in der Regel als Steuergerät ausgeführt ist. Die Steuereinrichtung 15 und die Einrichtung 1.2 zur Vorgabe des Fahrerwunsches zur Einstellung oder Änderung des Fahrzustandes sind bauteilmäßig betrachtet entweder in unmittelbarer räumlicher Nähe zueinander angeordnet und bilden somit durch deren Kopplung miteinander eine bauliche Einheit oder sind durch Integration in einem gemeinsamen Gehäuse, im Blockschaltbild gemäß Figur 2a durch 16 verdeutlicht integriert. Die Steuereinrichtung 15 dient dabei neben der Verarbeitung der mittels den Betätigungselementen 2.2, insbesondere den Einzel-Betätigungselementen 2.21 bis 2.2N vorgegebenen physikalischen und mechanischen Größen, welche mittels der Mittel 3.2 zur Generierung von Signalen bereits verarbeitet sind, bei Integration in Antriebssystemen von Fahrzeugen der Verarbeitung der fahrzeugseitig für die Ansteuerung der einzelnen Schaltelemente und Leistungsübertragungselemente der Getriebebaueinheit anfallenden erforderlichen Größen. Zu diesen zählen, hier im einzelnen nur beispielhaft angeführt, beispielsweise Vorgabesignale zur Betätigung bestimmter getriebespezifischer Elemente, insbesondere Bremseinrichtungen. Dabei werden von der Steuereinrichtung 15 bereits alle die Größen verarbeitet, deren Erfassungseinrichtungen in räumlicher Nähe zur Einrichtung 1.2 zur Vorgabe des Fahrerwunsches angeordnet sind bzw. eine bestimmte Distanz nicht überschreiten, da eine derartige Lösung vor allem den Nachteil unnötiger Verbindungsleitungen über erhebliche Distanzen vermeiden soll, indem bereits eine Vielzahl von in räumlicher Nähe zur Steuereinrichtung 15 angeordneten Erfassungseinrichtungen bereitgestellten Größen verarbeitet werden können und als Verarbeitungsergebnis der entsprechenden Steuerung einer Antriebskomponente, insbesondere der Getriebebaueinheit zugeführt werden können. Dazu weist die Steuereinrichtung mindestens einen weiteren Eingang 27 auf, welcher mit hier im einzelnen nicht dargestellten Einrichtungen zur Erfassung fahrzeugseitiger Kenngrößen gekoppelt ist, wobei die Kopplung im dargestellten Fall über eine, die Signale der einzelnen Einrichtung sammelnde Einheit 28 erfolgt. Denkbar ist jedoch auch die direkte Kopplung der genannten Einrichtungen mit der Steuereinrichtung 15. Bei der Ausführung gemäß Figur 2a erfolgt lediglich eine Aufbereitung der mittels der Einrichtung 4.2 erfaßten Größen.

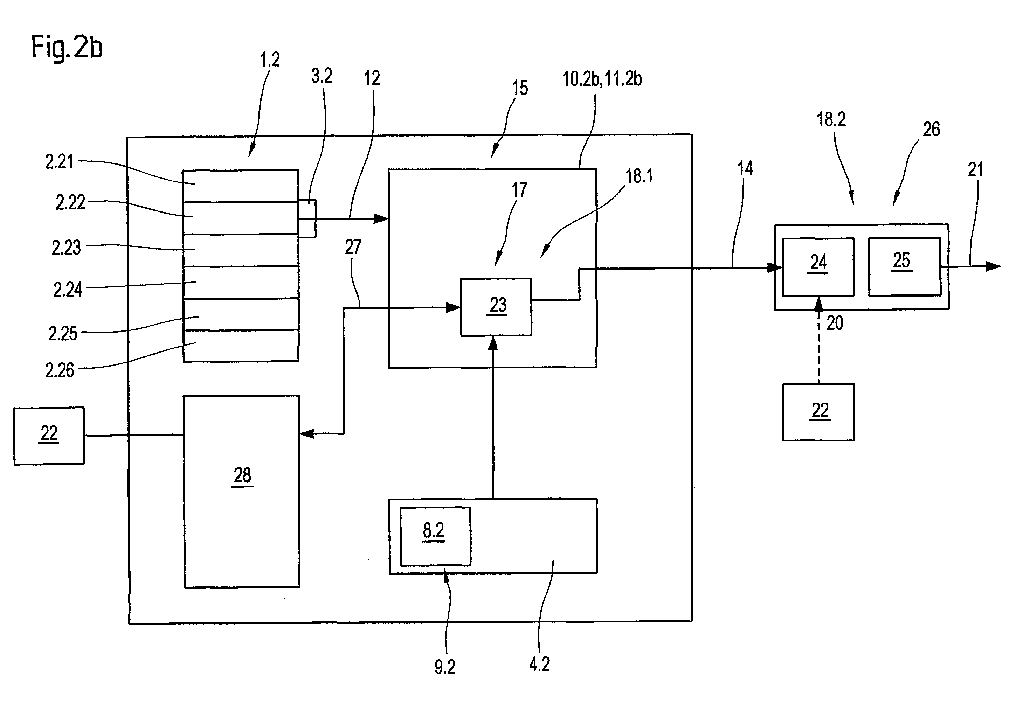

In einer Weiterentwicklung gemäß dem Blockschaltbild in Figur 2b umfaßt der Rechner 10.2b spezielle Mittel 17 zur Bearbeitung, insbesondere Aufbereitung und Auswertung der mittels dem Neigungssensor 8.2, insbesondere dem Drucksensor 9.2, erfaßten Größen zur späteren Ermittlung der Neigung N der Fahrbahn. Der übrige Grundaufbau der Einrichtung 1.2 zur Vorwahl entspricht dem in Figur 2a beschriebenen, weshalb für gleiche Elemente gleiche Bezugszeichen verwendet werden. Zur Erfassung der Neigung ist eine Berechnungseinrichtung 18 erforderlich. Diese ist dezentral ausgeführt, d.h. in mehrere räumlich voneinander entfernte Einheiten unterteilt, hier die Berechnungsteileinrichtungen 18.1 'und 18.2, und weist mindestens einen Eingang bei serieller Datenübertragung oder wie im dargestellten Fall zwei Eingänge - einen ersten Eingang 19 und einen zweiten Eingang 20 - und einen Ausgang 21 zur Ausgabe der Größe der Fahrbahnneigung N auf. Die Eingänge - erster Eingang 19 und zweiter Eingang 20 - sind dabei mit Einrichtungen zur Erfassung der zur Bestimmung der Neigung N erforderlichen Größen gekoppelt. Der erste Eingang 19 ist dabei mit der Einrichtung 4.2 zur wenigstens mittelbaren Erfassung einer die Neigung der Fahrbahn wenigstens mittelbar bestimmenden Größe in Form eines Drucksensors gekoppelt und entspricht im einfachsten Fall dem Eingang 13 des Rechners 10.2b. Der Eingang 20 ist mit einer Einrichtung 22 zur Erfassung wenigstens einer, eine zurückgelegte Fahrstrecke wenigstens mittelbar charakterisierenden Größe verbunden. Die Einrichtung 22 zur Erfassung einer Fahrstrecke wenigstens mittelbar charakterisierenden Größe zwischen zwei Referenzereignissen dient dabei entweder der direkten Ermittlung der Fahrstrecke oder aber der Ermittlung der Fahrstrecke aus anderen Größen.

Die Berechnungseinrichtung 18 umfaßt eine erste Berechnungseinheit 23, in welcher aus den mittels dem Drucksensor 9.2 ermittelten Druckwerten mit Hilfe der barometrischen Höhenformel die Höhe berechnet wird und die in einer ersten Berechnungsteileinrichtung 18.1 angeordnet ist. Des weiteren wird in Abhängigkeit der Eingangsgrößen, insbesondere der am zweiten Eingang 20 anliegenden Größen, für die während des Referenzzeitraumes oder der Referenzstrecke zurückgelegte Fahrstrecke $\Delta s$ diese direkt zur Weiterverarbeitung eingegeben oder aber aus den diese Größe bestimmenden Größen im dargestellten Fall in der Berechnungseinheit 23 oder bei Zuführung zu einer zweiten Berechnungsteileinrichtung 18.2 außerhalb der Einrichtung 1.2 zur Vorwahl eines Fahrerwunsches in einer weiteren Berechnungseinheit ermittelt. Aus den zum ersten Referenzereignis 1 und zum zweiten Referenzereignis 2 ermittelten Werten für den Druck p, für die Höhe h und die Fahrstrecke werden die entsprechenden Differenzwerte $\Delta s$ und $\Delta h$ ermittelt. Dies kann in einer weiteren Berechnungseinheit 24 erfolgen oder aber auch in der Berechnungseinheit 23. Aus den entsprechenden Größen erfolgt in einer weiteren Berechnungseinheit 25 die Ermittlung des die Fahrbahnneigung N beschreibenden Winkels $\alpha_N$ aus der Näherungsformel

$$\alpha_N = \frac{\Delta_h}{\Delta_s}; \; d.h. \; \arctan \frac{\Delta_h}{\Delta_s}$$

Die Neigung N ergibt sich dann näherungsweise aus:

$$N = \arctan \frac{\Delta_h}{\Delta_s} \cdot 100 \; (\%)$$

Entsprechend der konkreten Zuordnung der einzelnen Funktionen zur Ermittlung der Neigung können die einzelnen Berechnungseinheiten als eigenständige Berechnungseinheiten miteinander verknüpft werden und baulich und funktional entweder in einer einzigen Baueinheit integriert werden oder aber Bestandteil unterschiedlicher baulicher Rechnereinheiten sein, wobei in diesem Fall die Berechnungseinrichtung übergreifend von einer Mehrzahl von Recheneinheiten gebildet werden kann, die miteinander gekoppelt sind.

Gemäß der Ausführung in Figur 2b umfaßt der Rechner 10.2, insbesondere der Mikrorechner 11.2 zumindest noch eine zusätzliche Berechnungseinheit 23. Die mittels der Berechnungseinheit 23 ermittelte Höhe kann dann zur weiteren Verarbeitung entsprechenden Berechnungseinheiten zugeführt werden, die außerhalb der Einrichtung 1.2 zur Vorgabe eines Fahrerwunsches angeordnet sind und mit dieser lediglich über Leitungsverbindungen, hier der Leitungsverbindung 14 gekoppelt sind.

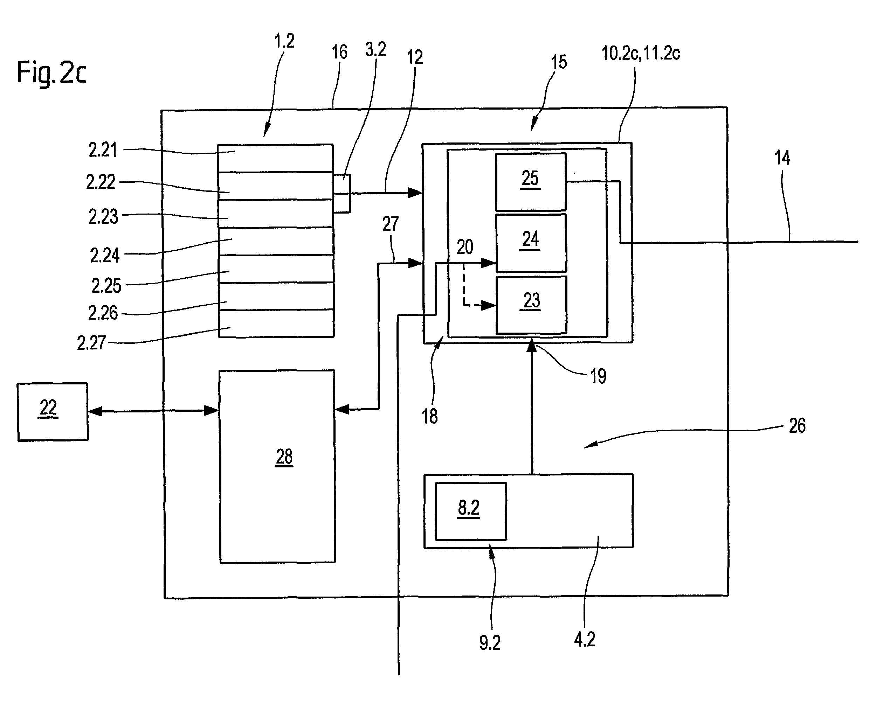

Die Figur 2c verdeutlicht eine Ausführung der Integration der einzelnen Berechnungseinheiten 23 bis 25 in der Einrichtung 1.2 zur Vorgabe eines Fahrerwunsches zur Einstellung oder Änderung des Fahrzustandes. Die einzelnen Berechnungseinheiten 23 bis 25 sind bezüglich ihrer Funktionen im Rechner 10.2c, insbesondere dem Mikrorechner 11.2c integriert. Am Ausgang 14 liegt in diesem Fall bereits auch das Signal für die Größe der Fahrbahnneigung N in % oder ein entsprechend adäquater Wert an.

In den Figuren 2b und 2c bilden die Gesamtheit der Berechnungseinheiten 23 bis 25, der Berechnungseinrichtung 18 bzw. der Berechnungsteileinrichtung und der Einrichtung 4.2 zur Erfassung einer die Neigung der Fahrbahn wenigstens mittelbar charakterisierenden Größe eine Vorrichtung 26 zur Bestimmung der Fahrbahnneigung.

Die Erfassung der Fahrbahnneigung N in einem Fahrzeug ist dabei verfahrensmäßig dadurch charakterisiert, daß für wenigstens zwei unterschiedliche, den Fortbewegungszustand des Fahrzeuges charakterisierende Referenzereignisse der jeweils am Fahrzeug vorherrschende Gesamtdruck ermittelt wird. Aus den jeweiligen Druckwerten - erster Druckwert $p_1$ für ein erstes Referenzereignis und zweiter Druckwert $p_2$ für ein zweites Referenzereignis - wird aus der barometrischen Höhenformel für den Schweredruck in Luft jeweils die Höhe des Fahrzeuges über Null für das erste Referenzereignis und die zweite Höhe $h_2$ für das zweite Referenzereignis ermittelt. Die beiden Referenzereignisse charakterisieren des weiteren entweder direkt oder indirekt eine Referenzstrecke $\Delta s$, welche durch den örtlichen Abstand der Position des Fahrzeuges zu beiden Referenzereignissen charakterisiert ist. Aus dem Quotienten der Differenz der Höhen - zweiter Höhe und erster Höhe - sowie der Referenzstrecke $\Delta s$ wird der Tangens des die Neigung N charakterisierenden Winkels $\alpha_N$ der Horizontalen gegenüber der Fahrbahn und damit der Winkel $\alpha_N$ für die Fahrbahnneigung über der Horizontalen ermittelt. Die Erfassung der Neigung der Fahrbahn in einem Fahrzeug erfolgt dabei immer zwischen wenigstens zwei Referenzereignissen, wobei jedoch zu einer genauen Erfassung auch eine Mehrzahl von Einzelerfassungen und damit einer Vielzahl von hintereinander vorgenommenen Beurteilungen von aufeinanderfolgenden Referenzereignissen erfolgen kann.

Die Höhenermittlung erfolgt entweder aus der barometrischen Höhenformel für den Schweredruck der Luft oder nach Laplace.

Die Ermittlung der jeweiligen Höhen $h_1$ und $h_2$ aus den erfaßten Druckwerten $p_1$ und $p_2$, wobei $p_1$ und $p_2$ an den Referenzereignissen jeweils dem dort vorherrschenden Gesamtdruck entsprechen, erfolgt aus der barometrischen Höhenformel, die in verschiedenen Modifikationen vorliegt.

Der einfachste Zusammenhang zwischen absoluter Höhe und Druck ergibt sich aus der Formel, die z. B. in Kuchling, Taschenbuch der Physik, Verlag Harri Deutsch zu finden ist.

$$p_x = p_0 \cdot e^{-\frac{p_0 G \cdot h_x}{p0}}$$

Mit den Stoffwerten für Luft am Boden und t = 0 C ergibt sich:

$$p_x = p_0 \cdot e^{-\frac{h_x}{7,99\ km}}$$

Durch Umformen nach der Höhe erhält man:

$$h_x = 18,4\ km \cdot 1\ lg\left(\frac{p_0}{p_x}\right)$$

mit

$h_x$ : Höhe in x, wobei $h_1$ = Höhe zu Referenzereignis 1 und $h_2$ = Höhe zu Referenzereignis 2 ist
$p_x$ : Druck in Höhe x
$p_0$ : Druck in Höhe Normal Null
G : Erdbeschleunigung 9,81 m/s$^2$
$T_m$ : mittlere thermodynamische Temperatur in $^\circ$C
$\alpha$ : thermischer Ausdehnungskoeffizient 1/273$^\circ$

Diese einfachste Höhenformel berücksichtigt nicht die Änderung der Temperatur mit zunehmender Höhe, was für die vorliegende Erfindung auch nicht unbedingt notwendig ist, da nur relative Änderungen der Höhe bestimmt werden und darauf der Temperatureinfluß sehr gering ist.

Dennoch können genauere Formeln verwendet werden. Eine Möglichkeit besteht in der Verwendung der internationalen Höhenformel, die die Temperaturänderung mit der Höhe berücksichtigt:

$$p_x = 1013\ hPa \left(1 - \frac{6{,}5\ h_x}{288\ km}\right)^{5{,}255}$$

Umgeformt erhält man:

$$h_x = \frac{288\ km}{6{,}5} \left(1 - \left(\frac{p_x}{1013\ hPa}\right)^{\frac{1}{5{,}255}}\right)$$

Hierin wird ein fester Zusammenhang zwischen Höhe und Lufttemperatur berücksichtigt, der mit ausreichender Genauigkeit bis 11000 m über NN gilt.

Eine andere Variante der barometrischen Höhenformel ergibt sich, wenn die auf die Höhe Normal Null bezogene mittlere thermodynamische Temperatur $T_m$ berücksichtigt wird, die aus der in der aktuellen Höhe $h_x$ herrschenden Tempertur $t_x$ nach folgender Beziehung berechnet wird:

$$T_m = t_x - h_x/100\ m \ast 0{,}65\ ^\circ C$$

$$h_x = 18{,}4\ km \cdot (1 + \alpha\ T_m)\ lg\left(\frac{p_0}{p_x}\right) = 18{,}4\ km \cdot (1 + \alpha\ T) \cdot (lg\ p_0 - lg\ p_x)$$

Die benötigten Höhen $h_1$ bzw. $h_2$ erhält man durch Anwendung der Gleichung für $h_x$, indem $h_x = h_1$ und $p_x = p_1$ bzw. $h_x = h_2$ und $p_x = p_2$ gesetzt wird.

Die Höhen $h_1$ und $h_2$ werden bei Vorliegen der dazugehörigen Referenzereignisse 1 und 2 ermittelt.

Zur Vermeidung von Fehlern können zusätzliche Maßnahmen ergriffen werden und eventuell eine Plausibilitätsprüfung durchgeführt werden. In diesem Fall müssen von der Berechnungseinheit zusätzliche Größen berücksichtigt werden.

Bezugszeichenliste

| | |
|---|---|
| 1; 1.2 | Einrichtung zur Vorgabe eines Fahrerwunsches zur Einstellung oder Änderung des Fahrzustandes |
| 2; 2.2; | Betätigungselement |
| 2.1 - 2.N; 2.21 - 2.2N | Einzel-Betätigungselement |
| 3; 3.2 | Mittel zur Generierung von Signalen zur wenigstens mittelbaren Ansteuerung von Schaltelementen |
| '4 | Einrichtung zur wenigstens mittelbaren Erfassung einer die Neigung der Fahrbahn wenigstens mittelbar bestimmenden Größe |
| 5 | bauliche Einheit |
| 6 | Gehäuse der Einrichtung 1 |
| 7 | Gehäuse der Einrichtung 4 |
| 8; 8.2 | Sensor, Neigungssensor |
| 9; 9.2 | Drucksensor |
| 10, 10.2, 10.2b, 10.2c | Rechner |
| 11 | Mikrorechner |
| 12 | Eingang |
| 13 | Eingang |

| 14 | Ausgang |
| 15 | Steuereinrichtung |
| 16 | Gehäuse |
| 17 | Mittel zur Aufbereitung |
| 18 | Berechnungseinrichtung |
| 18.1, 18.2 | Berechnungsteileinrichtungen |
| 19 | erster Eingang |
| 20 | zweiter Eingang |
| 21 | Ausgang |
| 22 | Einrichtung zur Erfassung einer die Fahrstrecke wenigstens mittelbar charakterisierenden Größe |
| 23 | Berechnungseinheit |
| 24 | Berechnungseinheit |
| 25 | Berechnungseinheit |
| 26 | Vorrichtung zur Bestimmung der Neigung einer Fahrbahn |
| 27 | Eingang |
| 28 | Einheit |

**Patentansprüche**

**1.** Einrichtung (1; 1.2) zur Vorgabe eines Fahrerwunsches zur Einstellung oder Änderung eines Fahrzustandes durch Ansteuerung von Stellgliedern, insbesondere Schaltelementen einer Getriebebaueinheit

mit mindestens einem Betätigungselement (2; 2.2; 2.1-2.N; 2.21-2.2N);

mit Mitteln (3; 3.2) zur Generierung mindestens eines Signales aus der die Betätigung des Betätigungselementes beschreibenden physikalischen Größe;

mit einer Einrichtung (4; 4.2) zur wenigstens mittelbaren Erfassung einer die Neigung der Fahrbahn wenigstens mittelbar charakterisierenden Größe;

**dadurch gekennzeichnet, daß** die Einrichtung (4; 4.2) zur wenigstens mittelbaren Erfassung der die Neigung der Fahrbahn wenigstens mittelbar charakterisierenden Größe und die vom Fahrer bedienbare Einrichtung (1; 1.2) zur Vorgabe des Fahrerwunsches zur Einstellung oder Änderung des Fahrzustandes einer Getriebebaueinheit eine bauliche Einheit (5) bilden.

**2.** Einrichtung (1; 1.2) nach Anspruch 1, **dadurch gekennzeichnet, daß** die Einrichtung (4; 4.2) zur wenigstens mittelbaren Erfassung der die Neigung der Fahrbahn wenigstens mittelbar beschreibenden Größe mindestens einen Sensor (8; 8.2) umfaßt.

**3.** Einrichtung (1; 1.2) nach Anspruch 2, **dadurch gekennzeichnet, daß** der Sensor (8; 8.2) ein Drucksensor (9; 9.2) ist.

**4.** Einrichtung (1; 1.2) nach einem der Ansprüche 1 bis 3, **dadurch gekennzeichnet, daß** die Einrichtung (1; 1.2) zur Vorgabe des Fahrerwunsches und die Einrichtung zur (4; 4.2) wenigstens mittelbaren Erfassung der die Neigung der Fahrbahn wenigstens mittelbar beschreibenden Größe im Bereich ihrer Gehäuse (6, 7) aneinander angeflanscht sind.

**5.** Einrichtung (1; 1,2) nach einem der Ansprüche 1 bis 3, **dadurch gekennzeichnet, daß** die Einrichtung (4; 4.2) zur wenigstens mittelbaren Erfassung der die Neigung der Fahrbahn wenigstens mittelbar beschreibenden Größe in der Einrichtung (1; 1.2) zur Vorgabe des Fahrerwunsches wenigstens teilweise integriert ist.

**6.** Einrichtung (1; 1.2) nach einem der Ansprüche 1 bis 5, **gekennzeichnet durch** die folgende Merkmale:

mit mindestens einem Rechner (10) zur sensorspezifischen Aufbereitung der erfassten Daten;
der Rechner (10) ist mit der Einrichtung (4; 4.2) zur Erfassung der die Fahrbahnneigung wenigstens mittelbar beschreibenden Größe und/oder den Mitteln (3; 3.2) zur Generierung mindestens eines Signales aus der die Betätigung des Betätigungselementes (2; 2.2; 2.1-2.N; 2.21-2.2N) charakterisierenden Größen gekoppelt.

**7.** Einrichtung (1; 1.2) nach Anspruch 6, **dadurch gekennzeichnet, daß** der Rechner (10) am Gehäuse (6) der Einrichtung (1; 1.2) angeordnet ist.

**8.** Einrichtung (1; 1.2) nach Anspruch 6, **dadurch gekennzeichnet, daß** der Rechner (10) im Gehäuse (6) der Einrichtung (1; 1.2) integriert ist.

**9.** Einrichtung (1; 1.2) nach einem der Ansprüche 6 bis 8, **dadurch gekennzeichnet, daß** der Rechner (10) von einer Steuereinrichtung (15) gebildet wird oder in dieser integriert ist.

**10.** Einrichtung (1; 1.2) nach Anspruch 9, **dadurch gekennzeichnet, daß** die Steuereinrichtung (10) eine Berechnungseinrichtung (18; 18.1, 18.2) aufweist, umfassend

wenigstens einen Eingang (20, 13);

der Eingang oder die Eingänge (20, 13) sind mit der Einrichtung (4; 4.2) zur wenigstens mittelbaren Erfassung der, die Neigung der Fahrbahn wenigstens mittelbar charakterisierenden Größe verbunden;

die Berechnungseinrichtung (18; 18.1, 18.2) umfaßt eine Berechnungseinheit (23) zur Ermittlung der geodätischen Höhe aus der, die Neigung der Fahrbahn wenigstens mittelbar charakterisierenden Größe in Form eines Druckwertes.

**11.** Einrichtung (1; 1.2) nach Anspruch 10, **dadurch gekennzeichnet, daß** die Berechnungseinrichtung (18) der Steuereinrichtung (15) eine weitere Berechnungseinheit (24) zur Ermittlung der Differenz zweier an zwei vordefinierbaren Referenzereignissen ermittelten geodätischen Höhen ($h_1$, $h_2$) aufweist.

**12.** Einrichtung (1; 1.2) nach einem der Ansprüche 10 oder 11, **gekennzeichnet durch** folgende Merkmale:

der Eingang oder einer der Eingänge (20, 13) der Berechnungseinrichtung (18) sind mit einer Einrichtung (22) zur Erfassung wenigstens einer, die zurückgelegte Fahrstrecke wenigstens mittelbar charakterisierenden Größe verbunden;

mit einer Berechnungseinheit zur Ermittlung der Länge der Fahrbahnstrecke.

**13.** Einrichtung (1; 1.2) nach Anspruch 12, **dadurch gekennzeichnet, daß** die Berechnungseinheit von der ersten Berechnungseinheit (23) und/oder der zweiten Berechnungseinheit (24) gebildet wird.

**14.** Einrichtung (1; 1.2) nach einem der Ansprüche 10 bis 13, **dadurch gekennzeichnet, daß** eine dritte Berechnungseinheit (25) zur Ermittlung der Fahrbahnneigung N aus dem Tangens des Quotienten aus der Höhendifferenz und der zurückgelegten Fahrstrecke für beide Referenzereignisse vorgesehen ist.

**15.** Einrichtung (1; 1.2) nach einem der Ansprüche 10 bis 14, **gekennzeichnet durch** die folgenden Merkmale:

die Steuereinrichtung (15) ist mit den Mitteln (3; 3.2) zur Generierung mindestens eines Signales aus der die Betätigung des Betätigungselementes (2; 2.2; 2.1-2.N; 2.21-2.2N) charakterisierenden Größen verbunden;

die Steuereinrichtung (15) ist mit Einrichtungen zur Erfassung fahrzeugspezifischer Größen zur Ansteuerung der Getriebebaueinheit verbunden.

**16.** Einrichtung (1; 1.2) nach einem der Ansprüche 10 bis 15, **dadurch gekennzeichnet, daß** die Steuereinrichtung (15) von einer Teilsteuereinrichtung einer Einrichtung zur Ansteuerung Getriebebaueinheit gebildet wird.

**17.** Einrichtung (1; 1.2) nach einem der Ansprüche 1 bis 16, **dadurch gekennzeichnet, daß** diese als Tastenschalter ausgeführt ist.

**18.** Einrichtung (1; 1.2) nach Anspruch 17, **dadurch gekennzeichnet, daß** der Tastenschalter als Druckschalteinrichtung ausgeführt ist.

**19.** Einrichtung (1; 1.2) nach Anspruch 17, **dadurch gekennzeichnet, daß** der Tastenschalter als Kippschalteinrichtung ausgeführt ist.

**20.** Einrichtung (1; 1.2) nach einem der Ansprüche 1 bis 16, **dadurch gekennzeichnet, daß** diese als Handhebel ausgeführt ist.

**21.** Einrichtung (1; 1.2) nach einem der Ansprüche 1 bis 20, **gekennzeichnet durch** folgende Merkmale:

die Einrichtung (4) umfasst eine Sensorbaueinheit mindestens zwei Temperatursensoren und einem Heizelement, welche in einem hermetisch dichten Gehäuse angeordnet sind;
die beiden Temperatursensoren sind zu einer Brücke verschaltet der Sensorbaueinheit ist eine Einrichtung zur Aufbereitung der Signale der Temperatursensoren zugerechnet.

**22.** Einrichtung (1; 1.2) nach Anspruch 21, **gekennzeichnet durch** die folgenden Merkmale:

mit mindestens einem Rechner (10) zur sensorspezifischen Aufbereitung der erfaßten Daten;
der Rechner (10) ist mit der Einrichtung (4; 4.2) zur Erfassung der die Fahrbahnneigung wenigstens mittelbar beschreibenden Größe und/oder den Mitteln (3; 3.2) zur Generierung mindestens eines Signales aus der die Betätigung des Betätigungselementes (2; 2.2; 2.1-2.N; 2.21-2.2N) charakterisierenden Größen gekoppelt.

**23.** Einrichtung (1; 1.2) nach Anspruch 22, **dadurch gekennzeichnet, daß** der Rechner (10) am Gehäuse (6) der Einrichtung (1; 1.2) angeordnet ist.

**24.** Einrichtung (1; 1.2) nach Anspruch 22, **dadurch gekennzeichnet, daß** der Rechner (10) im Gehäuse (6) der Einrichtung (1; 1.2) integriert ist.

**25.** Einrichtung (1; 1.2) nach einem der Ansprüche 22 bis 24, **dadurch gekennzeichnet, daß** der Rechner (10) von einer Steuereinrichtung (15) gebildet wird oder in dieser integriert ist.

**Claims**

**1.** A device (1; 1.2) for determining a driver's wish for setting or changing a driving state by triggering actuators, especially switching elements of a gear unit with at least one actuating element (2; 2.2; 2.1 to 2.N; 2.21 to 2.2N); with means (3; 3.2) for generating at least one signal from which the physical magnitude is obtained describing the actuation of the actuating element; with a device (4; 4.2) for detecting at least indirectly a variable characterizing at least indirectly the inclination of the roadway; **characterized in that** the device (4; 4.2) for detecting at least indirectly the variable characterizing at least indirectly the inclination of the roadway and the device (1; 1.2) to be operated by the driver for determining the driver's wish for setting or changing the driving state of a gear unit form a modular unit (5).

**2.** A device (1; 1.2) as claimed in claim 1, **characterized in that** the device (4; 4.2) for detecting at least indirectly the variable characterizing at least indirectly the inclination of the roadway comprises at least one sensor (8; 8.2).

**3.** A device (1; 1.2) as claimed in claim 2, **characterized in that** the sensor (8; 8.2) is a pressure sensor (9; 9.2).

**4.** A device (1; 1.2) as claimed in one of the claims 1 to 3, **characterized in that** the device (1; 1.2) for determining the driver's wish and device (4; 4.2) for detecting at least indirectly the variable characterizing at least indirectly the inclination of the roadway are flanged on each other in the region of their housing (6, 7).

**5.** A device (1; 1.2) as claimed in one of the claims 1 to 3, **characterized in that** the device (4; 4.2) for detecting at least indirectly the variable characterizing at least indirectly the inclination of the roadway is integrated at least partly in the device (1; 1.2) for determining the driver's wish.

**6.** A device (1; 1.2) as claimed in one of the claims 1 to 5, **characterized by** the following features:

with at least one computer (10) for preparing the detected data in a sensor-specific way;
with the computer (10) being coupled with the device (4; 4.2) for detecting at least indirectly the variable characterizing at least indirectly the inclination of the roadway and/or the means (3; 3.2) for generating at least one signal from which the variable is obtained characterizing the actuation of the actuating element (2; 2.2, 2.1 to 2.N; 2.21 to 2.2N).

**7.** A device (1; 1.2) as claimed in claim 6, **characterized in that** the computer (10) is arranged on the housing (6) of the device (1; 1.2).

**8.** A device (1; 1.2) as claimed in claim 6, **characterized in that** the computer (10) is integrated in the housing (6) of the device (1; 1.2).

9. A device (1; 1.2) as claimed in one of the claims 6 to 8, **characterized in that** the computer (10) is formed by a control device (15) or is integrated in the same.

10. A device (1; 1.2) as claimed in claim 9, **characterized in that** the control device (10) comprises a computation device (18; 18.1; 18.2), with
at least one input (20, 13);
with the input or inputs (20, 13) being connected to the device (4; 4.2) for detecting at least indirectly the variable characterizing at least indirectly the inclination of the roadway;
with the computation device (18; 18.1, 18.2) comprising a computation unit (23) for determining in the form of a pressure value the geodetic level from the variable characterizing at least indirectly the inclination of the roadway.

11. A device (1; 1.2) as claimed in claim 10, **characterized in that** the computation device (18) of the control device (15) comprises a further computation unit (24) for determining the difference between two geodetic levels ($h_1$, $h_2$) which are determined at two predeterminable reference events.

12. A device (1; 1.2) as claimed in one of the claims 10 or 11, **characterized by** the following features:

the input or one of the inputs (20, 13) of the computation device (18) is connected to the device (22) for detecting at least one variable characterizing the covered distance in an at least indirect manner;
with a computation unit for determining the length of the roadway distance.

13. A device (1; 1.2) as claimed in claim 12, **characterized in that** the computation unit is formed by the first computation unit (23) and/or the second computation unit (24).

14. A device (1; 1.2) as claimed in one of the claims 10 to 13, **characterized in that** a third calculation unit (25) is provided for determining the inclination N of the roadway from the tangent of the quotient of level difference and the completed distance covered for both reference events.

15. A device (1; 1.2) as claimed in one of the claims 10 to 14, **characterized by** the following features:

the control device (15) is connected to the means (3; 3.2) for generating at least one signal from the variables characterizing the actuation of the actuating element (2; 2.2; 2.1 to 2.N; 2.21 to 2.2N);
the control device (15) is connected to devices for detecting vehicle-specific variables for triggering the gear module.

16. A device (1; 1.2) as claimed in one of the claims 10 to 15, **characterized in that** the control device (15) is formed by a partial control device of a device for triggering the gear module.

17. A device (1; 1.2) as claimed in one of the claims 1 to 16, **characterized in that** the same is arranged as a momentary-contact switch.

18. A device (1; 1.2) as claimed in claim 17, **characterized in that** the momentary-contact switch is arranged as a pressure-operated switch device.

19. A device (1; 1.2) as claimed in claim 17, **characterized in that** the momentary-contact switch is arranged as a toggle switch device.

20. A device (1; 1.2) as claimed in one of the claims 1 to 16, **characterized in that** the same is arranged as a hand lever.

21. A device (1; 1.2) as claimed in one of the claims 1 to 20, **characterized by** the following features:

the device (4) comprises a sensor module with at least two temperature sensors and a heating element which are arranged in a hermetically sealed housing;
the two temperature sensors are switched into a bridge;
the sensor module is associated with a device for conditioning the signals of the temperature sensors.

22. A device (1; 1.2) as claimed in claim 21, **characterized by** the following features:

with at least one computer (10) for conditioning the data in a sensor-specific manner;
the computer (10) is coupled with the device (4; 4.2) for detecting at least indirectly the variable characterizing at least indirectly the inclination of the roadway and/or the means (3; 3.2) for generating at least one signal from the variables can be obtained which characterize the actuation of the actuating element (2; 2.2; 2.1 to 2.N; 2.21 to 2.2N).

23. A device (1; 1.2) as claimed in claim 22, **characterized in that** the computer (10) is arranged on the housing (6) of the device (1; 1.2).

24. A device (1; 1.2) as claimed in claim 22, **characterized in that** the computer (10) is integrated in the housing (6) of the device (1; 1.2).

25. A device (1; 1.2) as claimed in one of the claims 22 to 24, **characterized in that** the computer (10) is formed by a control device (15) or is integrated in the same.

## Revendications

1. Dispositif (1 ; 1.2) pour l'indication d'une demande du conducteur pour le réglage ou la modification d'un état de conduite par actionnement d'organes de réglage, en particulier de rapports d'une unité de boîte de vitesses, avec au moins un élément d'actionnement (2 ; 2-2 ; 2.1-2.N ; 2.21-2.2N) ; avec des moyens (3 ; 3.2) pour produire au moins un signal à partir de la grandeur physique décrivant l'actionnement de l'élément d'actionnement ; avec un dispositif (4 ; 4.2) pour la détection au moins indirecte d'une grandeur caractérisant au moins indirectement l'inclinaison de la chaussée ; **caractérisé en ce que** le dispositif (4 ; 4.2) pour la détection au moins indirecte de la grandeur caractérisant au moins indirectement l'inclinaison de la chaussée et le dispositif (1 ; 1.2) pouvant être actionné par le conducteur pour indiquer une demande du conducteur pour le réglage ou la modification d'un état de conduite d'une unité de boîte de vitesses forment une unité constructive (5).

2. Dispositif (1 ; 1.2) selon la revendication 1, **caractérisé en ce que** le dispositif (4 ; 4.2) pour la détection au moins indirecte de la grandeur décrivant au moins indirectement l'inclinaison de la chaussée comprend un capteur (8 ; 8.2).

3. Dispositif (1 ; 1.2) selon la revendication 2, **caractérisé en ce que** le capteur (8 ; 8.2) est un capteur de pression (9 ; 9.2).

4. Dispositif (1 ; 1.2) selon l'une quelconque des revendications 1 à 3, **caractérisé en ce que** le dispositif (1 ; 1.2) pour indiquer la demande du conducteur et le dispositif (4 ; 4.2) pour la détection au moins indirecte de la grandeur décrivant au moins indirectement l'inclinaison de la chaussée sont fixés l'un à l'autre par une bride au niveau de leur boîtier (6, 7).

5. Dispositif (1 ; 1.2) selon l'une quelconque des revendications 1 à 3, **caractérisé en ce que** le dispositif (4 ; 4.2) pour la détection au moins indirecte de la grandeur décrivant au moins indirectement l'inclinaison de la chaussée est au moins partiellement intégré dans le dispositif (1 ; 1.2) pour indiquer la demande du conducteur.

6. Dispositif (1 ; 1.2) selon l'une quelconque des revendications 1 à 5, **caractérisé en ce qu'**il comprend les éléments suivants :

   au moins un calculateur (10) pour le traitement des données captées de manière spécifique du capteur ; lequel calculateur (10) est couplé avec le dispositif (4 ; 4.2) pour la détection au moins indirecte de la grandeur décrivant au moins indirectement l'inclinaison de la chaussée et/ou les moyens (3 ; 3.2) pour la génération d'au moins un signal à partir des grandeurs caractérisant l'actionnement des éléments d'actionnement (2 ; 2.2 ; 2.1-2.N ; 2.21-2.2N).

7. Dispositif (1 ; 1.2) selon la revendication 6, **caractérisé en ce que** le calculateur (10) est disposé sur le boîtier (6) du dispositif (1 ; 1.2).

8. Dispositif (1 ; 1.2) selon la revendication 6, **caractérisé en ce que** le calculateur (10) est intégré dans le boîtier (6) du dispositif (1 ; 1.2).

**9.** Dispositif (1 ; 1.2) selon l'une quelconque des revendications 6 à 8, **caractérisé en ce que** le calculateur (10) est formé par un dispositif de commande (15) ou est intégré dans celui-ci.

**10.** Dispositif (1 ; 1.2) selon la revendication 9, **caractérisé en ce que** le dispositif de commande (10) présente un dispositif de calcul (18 ; 18.1, 18.2) comprenant :

> au moins une entrée (20, 13) ;
> la ou les entrées (20, 13) communiquant avec le dispositif (4 ; 4.2) pour la détection au moins indirecte de la grandeur décrivant au moins indirectement l'inclinaison de la chaussée ;
> l'unité de calcul (18 ; 18.1, 18.2) comprenant une unité de calcul (23) pour la détermination de la hauteur géodésique à partir de la grandeur caractérisant au moins indirectement l'inclinaison de la chaussée sous la forme d'une valeur de pression.

**11.** Dispositif (1 ; 1.2) selon la revendication 10, **caractérisé en ce que** le dispositif de calcul (18) du dispositif de commande (15) comprend une autre unité de calcul (24) destinée à déterminer la différence de deux hauteurs géodésiques ($h_1$, $h_2$) définies lors de deux événements de référence prédéfinis.

**12.** Dispositif (1 ; 1.2) selon l'une quelconque des revendications 10 ou 11, **caractérisé par** les éléments suivants :

> l'entrée ou une des entrées (20, 13) du dispositif de calcul (18) communique avec un dispositif (22) pour la détection d'au moins une grandeur caractérisant au moins indirectement la distance parcourue,
> avec une unité de calcul destinée à déterminer la longueur de la distance parcourue.

**13.** Dispositif (1 ; 1.2) selon la revendication 12, **caractérisé en ce que** l'unité de calcul est formée par la première unité de calcul (23) et/ou la deuxième unité de calcul (24).

**14.** Dispositif (1 ; 1.2) selon l'une quelconque des revendications 10 à 13, **caractérisé en ce qu'**il est prévu une troisième unité de calcul (25) destinée à déterminer l'inclinaison de la chaussée N à partir de la tangente du quotient de la différence de hauteur et de la distance parcourue pour les deux événements de référence.

**15.** Dispositif (1 ; 1.2) selon l'une quelconque des revendications 10 à 14, **caractérisé par** les éléments suivants :

> le dispositif de commande (15) communique avec les moyens (3, 3.2) pour la génération d'au moins un signal à partir des grandeurs caractérisant l'actionnement de l'élément d'actionnement (2 ; 2.2 ; 2.1-2.N ; 2.21-2.2N) ;
> le dispositif de commande (15) communique avec des dispositifs destinés à détecter des grandeurs spécifiques du véhicule pour commander l'unité de boîte de vitesses.

**16.** Dispositif (1 ; 1.2) selon l'une quelconque des revendications 10 à 15, **caractérisé en ce que** le dispositif de commande (15) est formé par un dispositif partiel de commande d'un dispositif pour la commande de l'unité de boîte de vitesses.

**17.** Dispositif (1 ; 1.2) selon l'une quelconque des revendications 1 à 16, **caractérisé en ce qu'**il est construit comme un commutateur à touche.

**18.** Dispositif (1 ; 1.2) selon la revendication 17, **caractérisé en ce que** le commutateur à touche est conçu comme un dispositif à bouton-poussoir.

**19.** Dispositif (1 ; 1.2) selon la revendication 18, **caractérisé en ce que** le commutateur à touche est conçu comme un commutateur basculant.

**20.** Dispositif (1 ; 1.2) selon l'une quelconque des revendications 1 à 16, **caractérisé en ce qu'**il est conformé comme un levier manuel.

**21.** Dispositif (1 ; 1.2) selon l'une quelconque des revendications 1 à 20, **caractérisé par** les éléments suivants :

> le dispositif (4) comprend une unité de capteurs avec au moins deux capteurs de température et un élément chauffant, qui sont disposés dans un boîtier hermétique ;
> les deux capteurs de température sont montés en pont ;

l'unité de capteurs est associée à un dispositif pour le traitement des signaux des capteurs de température.

**22.** Dispositif (1 ; 1.2) selon la revendication 21, **caractérisé par** les éléments suivants :

au moins un calculateur (10) pour le traitement des données captées de manière spécifique du capteur ; lequel calculateur (10) est couplé avec le dispositif (4 ; 4.2) pour la détection au moins indirecte de la grandeur décrivant au moins indirectement l'inclinaison de la chaussée et/ou les moyens (3 ; 3.2) pour la génération d'au moins un signal à partir des grandeurs caractérisant l'actionnement des éléments d'actionnement (2 ; 2.2 ; 2.1-2.N ; 2.21-2.2N).

**23.** Dispositif (1 ; 1.2) selon la revendication 22, **caractérisé en ce que** le calculateur (10) est disposé sur le boîtier (6) du dispositif (1 ; 1.2).

**24.** Dispositif (1 ; 1.2) selon la revendication 22, **caractérisé en ce que** le calculateur (10) est intégré dans le boîtier (6) du dispositif (1 ; 1.2).

**25.** Dispositif (1 ; 1.2) selon l'une quelconque des revendications 22 à 24, **caractérisé en ce que** le calculateur (10) est formé par un dispositif de commande (15) ou est intégré dans celui-ci.

Fig. 1a

2.1 2.2 2.3 2.4 2.n

1

3

6

5

7

8

4

9

Fig. 1b

1

2.1 2.2 2.3 2.4 2.n

3

6

5

8

7

4

9

Fig. 2a

EP 1 309 809 B1

Fig. 2b

EP 1 309 809 B1

Fig.2c

EP 1 309 809 B1